# EUROPÄISCHE PATENTSCHRIFT

(11) **EP 2 980 768 B1**
(45) Veröffentlichungstag und Bekanntmachung des Hinweises auf die Patenterteilung: **13.10.2021**
(21) Anmeldenummer: 15179466.6
(22) Anmeldetag: 03.08.2015
(51) Int. Cl.: G08B 17/10, B65D 55/10, F16B 41/00, G01D 11/24

(54) **BRANDMELDER MIT VERRIEGELUNG UND VERFAHREN ZUM VER- UND ENTRIEGELN VON EINEM MELDERTEIL MIT EINEM SOCKELTEIL EINES BRANDMELDERS**
FIRE DETECTOR WITH LOCKING AND METHOD FOR LOCKING AND UNLOCKING A DETECTOR PART FROM/TO A BASE OF A FIRE ALARM
DISPOSITIF D'ALERTE INCENDIE DOTE DE VERROUILLAGE ET PROCEDE DE VERROUILLAGE/DEVERROUILLAGE D'UNE PARTIE DE DISPOSITIF D'ALERTE AYANT UNE PARTIE DE SOCLE D'UN DISPOSITIF D'ALERTE D'INCENDIE

(30) Priorität: 02.08.2014 DE 102014011576
(43) Veröffentlichungstag der Anmeldung: 03.02.2016
(73) Patentinhaber: Hekatron Vertriebs GmbH, 79295 Sulzburg (DE)
(72) Erfinder: Gerboth, Lars, 79112 Freiburg (DE)

(56) Entgegenhaltungen:
- WO-A1-2014/121349
- US-A- 4 074 341

## Beschreibung

Die Erfindung betrifft einen Gefahrenmelder, insbesondere einen Brandmelder, mit wenigstens einem der Befestigung dienenden Sockelteil, und mit einem mit dem Sockelteil lösbar verbindbaren oder verbundenen Melderteil, wobei das Sockel-und/oder das Melderteil wenigstens ein bewegbares Verriegelungselement aufweist bzw. aufweisen, welches in seiner Verriegelungsstellung in eine Ausnehmung an dem Melder-und/oder dem Sockelteil greift, deren Begrenzung eine Bewegung zum Lösen des in Gebrauchsstellung mit dem Sockelteil verbundenen Melderteils von ersterem verhindert, wobei das Verrieglungselement in einem Innenbereich des Gefahrenmelders mit Abstand von dessen Seitenrand zwischen Sockel- und Melderteil angeordnet ist. Überdies betrifft die Erfindung auch ein Montage-/Abnehmewerkzeug, ein System aus Brandmelder und Montage-/Abnehmewerkzeug sowie ein Verfahren zum Ver- und Entriegeln von einem Melderteil mit einem Sockelteil eines Brandmelders.

Derartige Brandmelder sind bekannt und werden dazu eingesetzt, den Ausbruch eines Brandes anhand der Erfassung wenigstens einer Brandkenngröße mittels ihrer Sensorik zu ermitteln und in der Folge elektrisch geschaltet einen irgendwie gearteten Alarm auszulösen. Zu Wartungszwecken sollen hierbei Sockel-und Melderteil einfach voneinander zu lösen sein.

Für akustische Signalgeber sieht die DIN EN 54-3 als einschlägige Norm jedoch vor, dass diese nur unter der Verwendung von Werkzeugen z. B. aus einem Sockelteil entnehmbar sind. Für Gefahrenmelder, insbesondere Brandmelder, die einen entsprechenden akustischen Signalgeber umfassen gilt diese Anforderung gleichermaßen. Daher sollen auch reine Signalgeber ohne eigene Sensoren im Folgenden durch die Bezeichnung Gefahrenmelder mit erfasst werden. Somit ergibt sich für derartige Melder das Problem, dass sie einerseits nicht ohne den Einsatz eines Werkzeuges, z. B. eines Schraubendrehers, entnehmbar sein dürfen andererseits aber möglichst einfach und ohne Zeitverlust während der Wartungsarbeiten aus dem Sockel entnehmbar sein sollen. Bei Meldern die mit Batterie betrieben werden, kommt es bisweilen vor, dass Bewohner die Batterien entnehmen, weil sie gerade anderweitig eine Batterie benötigen. Das hat zur Folge, dass der Melder nicht mehr funktioniert. Dieses Verhalten soll zumindest erschwert werden und dennoch soll ein reibungsloser Batterietausch im Zuge einer professionellen Wartung möglich bleiben.

Um darüber hinaus auch grundsätzlich die Manipulation von Melderkomponenten zu verhindern, ist es von Vorteil, das Öffnen des Melders durch Lösen des Melderteils von dem Sockelteil zu erschweren, weswegen das Verriegelungselement an dem Brandmelder vorgesehen ist.

Bei bekannten Lösungen, wie man sie etwa aus der DE 24 53 061 und der US 4 074 341 A kennt, ist das Verriegelungselement aus einem Stempel gebildet, welcher durch eine berührungslos wirkende Magnetkraft in eine Verriegelungsstellung bewegt und gehalten werden kann, in welcher der Stempel in einen seitlichen Schlitz des Gehäuses des Melderteils greift. Zum Entriegeln wird das teilweise im Außenraum des Melders befindliche Verriegelungselement durch einen Abschnitt eines Montage-/Abnehmewerkzeugs mechanisch zurück in die Entriegelungsstellung geschoben. Hierdurch ist an dem Gehäuse des Melderteils eine zusätzliche Öffnung gebildet, die in unerwünschter Weise Zugriff auf das Melderinnere gestattet, was gegebenenfalls zur Verfälschung der durch die Sensorik ermittelten Werte von Brandkenngrößen und mithin zu Fehlalarmen führen kann. Überdies unterliegt die Sensorik und Elektronik hierdurch einer stärkeren allgemeinen Verschmutzung und weiteren Umwelteinflüssen, so dass die

Lebensdauer des Brandmelders verkürzt wird.

Zudem ist aus der DE 10 2012 010 011 ein Aufnahmeteil bekannt, in dem sich ein Verriegelungselement befindet, das durch eine im Inneren des Aufnahmeteils berührungslos wirkende Magnetkraft von seiner Verriegelungsstellung in eine Entriegelungsstellung führbar ist. Um hier jedoch die Entriegelung herbeizuführen, wird ein mit einem Magneten versehenes Mobilteil in das Aufnahmeteil eingeführt.

Aus der WO 2014/121349 ist ein Verriegelungselement zum Verriegeln eines Gefahrenmelders bekannt, welches z. B. mittels Gravitation aus seiner Entriegelungsstellung in eine Verriegelungsstellung geführt wird. Für den umgekehrten Vorgang des Entriegelns, wird ein Unterdruck an einer Öffnung im Gehäuse des Gefahrenmelders appliziert, welcher mittels einer Röhre bis an das Verriegelungselement übertragen wird. In Folge dieses Unterdruckes, wirkt eine Kraft auf das Verriegelungselement, die es aus seiner Verriegelungsstellung in eine Entriegelungsstellung führt.

Es ist daher die Aufgabe der vorliegenden Erfindung, einen Brandmelder zur Verfügung zu stellen, der ohne mechanische Zugriffsmöglichkeit auf das Melderinnere und bei erhöhter Lebensdauer ein einfaches Lösen des Melderteils von dem Sockelteil gestattet.

Diese Aufgabe wird gelöst durch einen Gefahrenmelder, insbesondere einen Brandmelder, der eingangs genannten Art, bei dem das Verriegelungselement durch eine von außerhalb des Gefahrenmelders ausgeübte jedoch innerhalb des Gefahrenmelders berührungslos wirkende Kraft, nämlich eine Magnetkraft oder eine elektrische Kraft, angetrieben aus seiner Verriegelungsstellung in eine Entriegelungsstellung führbar ist, welche eine Lösebewegung und/oder eine Schließbewegung der Teile zueinander freigibt.

Durch eine derartige Anordnung des Verriegelungselements ist es von außerhalb des Melders auch mit mechanisch eingreifenden Hilfsmitteln nicht möglich, an das Melderinnere zu gelangen, ohne den Melder dabei nachhaltig zu beschädigen. Auf diese Weise kann eine unerwünschte Manipulation des Melders wirkungsvoll verhindert werden. Gleichzeitig wird das Verriegelungselement aber durch eine von außen berührungslos durch das Gehäuse hindurch wirkende abstoßende oder anziehende Kraft, nämlich eine Magnet- oder eine elektrische Kraft, die in die Nähe des in seiner Verriegelungsstellung verharrenden Verriegelungselements herangeführt wird oder in dessen Nähe erzeugt wird, in die Entriegelungsstellung überführt und somit das Lösen des Melderteils von dem Sockelteil bzw. das Befestigen daran in einfacher Weise ermöglicht. Hierbei versteht sich, dass das Verriegelungselement zumindest teilweise elektrostatisch, als Elektret, magnetisch, magnetisierbar, als Magnet oder als guter elektrischer Leiter ausgebildet ist. Hierzu kann etwa ein entsprechend ausgestattetes Montage-Werkzeug, insbesondere ein Abnehmewerkzeug z. B. ein sogenannter Melderpflücker, vorgesehen sein, das dem Brandmelder zugeordnet ist und die berührungslos wirkende Kraft eben dadurch zur Verfügung stellt, dass es mit wenigstens einem elektrischen oder magnetischen Feld hervorrufenden Mittel insbesondere mit einem Permanentmagneten, einem Elektromagneten oder Elektreten versehen ist. Die berührungslos wirkende Kraft kann dabei unmittelbar durch Abstoßung bzw. Anziehung zweier entsprechend gepolter Magnete, zweier entsprechend geladener Elektreten oder mittelbar durch die Induktion eines Wirbelstromes im Verriegelungselement hervorgerufen werden.

Um das feldhervorrufende Mittel z.B. einen Magneten oder Elektreten, der in der Lage ist, die Verriegelung des Verriegelungselements zu lösen, in geeigneter Weise an den Brandmelder heranzuführen, ist dem erfindungsgemäßen Brandmelder in einer vorteilhaften Ausführung ein Montage- bzw. Abnehmewerkzeug zugeordnet, dessen eines Ende mit mindestens einem Antriebselement ausgestattet, das in eine Auszackung an dem Gefahrenmelder bzw. Brandmelder eingreift und mit dem der Gefahren- bzw. Brandmelder zu einer Löse- oder einer Schließbewegung angetrieben werden kann. Dieses eine Ende des Montage- / Abnehmewerkzeugs kann auch eine Aufnahmeöffnung aufweisen, die in Gebrauchsstellung des Montagewerkzeugs / Abnehmewerkzeugs zumindest einen Abschnitt des Melderteils des Gefahren- bzw. Brandmelders aufnimmt und welches wenigstens ein Magnetelement aufweist, dessen Annäherung an das Verriegelungselement und/oder dessen Aktivierung das Verriegelungselement aus seiner Verriegelungsstellung in seine Entriegelungsstellung bewegt.

Dabei kann das Montage-/Abnehmewerkzeug beispielsweise eine Art Ausnehmung aufweisen, die einen an dem Brandmelder vorspringenden zylindrischen Abschnitt aufzunehmen in Lage ist, wodurch der an dem Werkzeug befindliche Magnet oder Elektret vorteilhaft in die Nähe des Übergangs zwischen Sockelteil und Melderteil zu bringen ist, also dorthin, wo sich das Verriegelungselement befindet.

Einfach aufgebaut und mit wenig Aufwand bewegbar kann bei einer Ausführung des Brandmelders das Verriegelungselement durch zumindest einen Stift mit wenigstens einem geraden, insbesondere zylindrischen Abschnitt gebildet sein. Beispielsweise kann der Stift dabei nur einen Querschnitt aufweisen, dieser kann sich aber auch über die Länge des Stiftes ändern, so dass etwa ein Stempel den Stift bildet, dessen größerer Querschnittsabschnitt einen Bewegungsanschlag bilden kann.

Um Sockelteil und Melderteil bei Verbindung einfach verriegeln zu können, ist es bei einer Ausführung des Brandmelders vorgesehen, dass das Verriegelungselement durch Schwerkraft oder eine andere antreibende Kraft bedingt aus seiner Entriegelungsstellung in die Verriegelungsstellung gleitet. Die antreibende Kraft kann hierbei z. B. durch Beaufschlagung eines Endes des Verriegelungselements mit einer Feder zur Verfügung gestellt werden. Bei Einsatz einer Feder sind die beiden Teile des Brandmelders lageunabhängig in ihrer Gebrauchsstellung verriegelbar, also auch beispielsweise auf dem Kopf stehend.

Damit das Verriegelungselement bei dem Verriegelungs- und dem Entriegelungsvorgang eine definierte Bewegung ausführt, und dabei nicht verkippt oder verkantet, ist es in einer vorteilhaften Ausführung in einem an dem Melder- und oder Sockelteil angeordneten Führungsmittel, insbesondere einer Führungshülse, aufgenommen, in welchem es zwischen zwei Anschlägen beweglich führbar ist.

In einfacher Weise lassen sich das Sockelteil und das Melderteil des Brandmelders verbinden, wenn diese einen im Wesentlichen zylindrischen Querschnitt aufweisen und durch eine Drehbewegung miteinander verbindbar bzw. voneinander lösbar sind. Die Teile können hierbei in Gebrauchsstellung etwa eine Schraubverbindung an ihren Gehäusen eingehen oder beispielsweise in Art eines Bajonettverschlusses miteinander verbunden sein.

Zum Verriegeln der beiden Teile des Brandmelders greift das an dem Sockelteil angeordnete Verriegelungselement in eine Ausnehmung des Melderteils, die bei einer zweckmäßigen Weiterbildung des Brandmelders durch zwei einander in Gebrauchsstellung von Sockel- und Melderteil gegenüberliegende, jeweils an diesen angeordnete Öffnungen gebildet ist, in welche das Verriegelungselement in Gebrauchsstellung gemeinsam greift. Kommen die beiden Öffnungen beim Verbinden der Brandmelderteile zur Deckung, kann das Verriegelungselement bei entsprechender angetriebener Auslegung von selbst in die Verriegelungsstellung gleiten und den Brandmelder im Grunde automatisch verriegeln. Dann, wenn das Verriegelungselement z. B. durch eine Federkraft angetrieben aus der Entriegelungsstellung in die Verriegelungsstellung gleitet kann das Verriegelungselement auch in dem Melderteil angeordnet sein und in eine Ausnehmung am Sockelteil eingreifen.

Bei einer anderen vorteilhaften Ausführung des Brandmelders begrenzt ein Vorsprung an dem Melderteil die Ausnehmung, welcher sich im Bewegungspfad des Verriegelungselements bei der öffnenden bzw. schließenden Drehbewegung befindet. Nachdem das Verriegelungselement bei der Schließbewegung an dem Vorsprung vorbei geführt wurde, sperrt dieser anschließend die Rückwärtsbewegung, also das Öffnen des Brandmelders. Um das Verriegelungselement beim Lösen an dem Vorsprung vorbeizuführen, ist es auch denkbar dieses beispielsweise seitlich auszulenken.

In einer Weiterbildung des Brandmelders kann dabei der Vorsprung einen sich im Verlauf des Bewegungspfads des Verriegelungselements ändernden, insbesondere in Verriegelungsrichtung größer werdenden Querschnitt aufweisen. Dies kann bei dem von dem Melderteil in Richtung des Sockelteils oder bei dem von dem Sockelteil in Richtung des Melderteils vorspringenden Vorsprung zum Beispiel durch eine ansteigende Schräge realisiert sein. Bei der Schließbewegung der Brandmelderteile kommt das freie Ende des Verriegelungselements mit der Schräge an einem Punkt von deren Länge in Anlage und wird durch die Fortsetzung der Bewegung entlang der ansteigenden Schräge zunächst entgegen der Verriegelungsrichtung ausgelenkt, um am Ende des Vorsprungs in die Verriegelungsstellung zu gleiten. Um die Sensorik an dem Melderteil von Schaltungen und Befestigungen ein Stück weit zu trennen, kann es in einer weiteren Ausführung vorgesehen sein, dass das Melderteil zumindest zwei axiale Abschnitte aufweist, von welchen ein dem Sockelteil zugewandter Abschnitt mit einer umlaufenden, axial orientierten Abschnittswand versehen ist.

Das Sockelteil und das Melderteil des Brandmelders sollen in Gebrauchsstellung auf eine Weise fest aneinander gehalten sein, dass, auch abseits des Verriegelungselements, ein unbeabsichtigtes Lösen voneinander erschwert ist. Hierfür ist bei einer zweckmäßigen Ausbildung des Brandmelders an der Abschnittswand zumindest ein erstes Verbindungsglied eines Verbindungsmittels vorgesehen, welches in Gebrauchsstellung der Teile eine Verbindung mit einem komplementären, an dem Sockelteil angeordneten, zweiten Verbindungsglied eingeht.

Eine zweckmäßige Weiterbildung kann hierbei darin bestehen, dass das Verbindungsmittel ein Rast- oder Schnappmittel ist, bei welchem mehrere erste und zweite Verbindungsglieder an Wänden des Sockel- und des Melderteils einander gegenüberliegend über deren Umfang verteilt, insbesondere gleichmäßig verteilt, angeordnet sind. Beispielsweise kann das Verbindungsmittel dabei aus ersten Verbindungsgliedern mit Rastnasen bestehen, die an der Abschnittswand des Melderteils in einem dem Sockelteil zugewandten Bereich angeordnet sind, wobei die betreffenden Rastnasen von der Abschnittswand radial nach außen ragen und in radialer Richtung zumindest in Grenzen federnd beweglich sind. Bei Verbindung des Melderteils mit dem Sockelteil können diese Rastnasen etwa mit Wandausnehmungen des Sockelteils als zweiten Verbindungsgliedern verrasten, wobei im verrasteten Zustand jeweils ein Rand der Wandausnehmung in eine Nut an der Rastnase eingreift. Diese Verbindung ist durch einen geringen Kraftaufwand in Löserichtung der Brandmelderteile lösbar, wenn die Rastnasen in Löserichtung radial nach innen angeschrägt sind.

Vor allem zum Trennen aber auch zum Verbinden der Brandmelderteile von- bzw. miteinander, insbesondere bei beispielsweise an einer Wand oder Decke montiertem Sockelteil ist dem Brandmelder, wie bereits erwähnt, ein Montage- / Abnehmewerkzeug zugeordnet, das mit einem Antriebselement versehen ist. Vorteilhaft ist das Montage- / Abnehmewerkzeug mit Wandsegmenten versehen, die in Gebrauchsstellung das Melderteil zumindest teilweise einfassen, welches Montage-/Abnehmewerkzeug insbesondere auch dazu dient, wenigstens ein eine berührungslos wirkende Kraft hervorrufendes Element z. B. einen Magneten oder Elektreten zur Beaufschlagung des Verriegelungselements in dessen Nähe zu bringen und dadurch das Verriegelungselement in die Entriegelungsstellung zu überführen. In einer den Magneten oder Elektreten nahe an das Verriegelungselement bringenden vorteilhaften Konfiguration ist das Montage-/Abnehmewerkzeug des Brandmelders mit einer Mehrzahl von Wandsegmenten versehen, die in Gebrauchsstellung das Melderteil zumindest teilweise einfassen, und an deren Stirnseite das wenigstens eine, eine berührungslos wirkende Kraft hervorrufende, Element insbesondere ein Magnet- oder Elektretelement angeordnet ist.

Das Melderteil zum Verbinden mit und/oder Lösen von dem Sockelteil gut zu fassen bekommt man mit einer zweckmäßigen Weiterbildung des Montage-/Abnehmewerkzeuges, bei dem an dem Montage-/Abnehmewerkzeug wenigstens ein flexibles Haltemittel vorgesehen ist, welches bei Anordnung des Montage-/Abnehmewerkzeugs an dem Brandmelder mit der Außenwand des Melderteils zumindest bereichsweise einen Kraftschluss bildet. Das flexible Haltemittel kann dabei beispielsweise durch ein Gummiband gebildet sein, das in Gebrauchsstellung des Montage-/Abnehmewerkzeugs zumindest bereichsweise an der Außenwand des Melderteils zu liegen kommt.

Die schließende oder öffnende Drehbewegung der beiden Teile des Brandmelders kann alternativ oder ergänzend auch anderweitig angetrieben sein. Eine vorteilhafte Ausführung des Montage-/Abnehmewerkzeuges sieht hierzu an dem Montage-/Abnehmewerkzeug wenigstens ein Antriebselement vor, welches zwischen zwei benachbarten Wandsegmenten der Abnehmeeinrichtung angeordnet ist, und welches in Gebrauchsstellung des Montage-/Abnehmewerkzeugs an dem Brandmelder in eine Auszackung des Melderteils greift. Dieses Antriebselement kann beispielsweise ein zwischen den Wandelementen angeordnetes Winkelglied sein, das kippbar gelagert ist und beim Heranführen des Montage-/Abnehmewerkzeugs an den Brandmelder mit einer Auszackung an dem Melderteil in Eingriff gerät und beim Verdrehen des Montage-/Abnehmewerkzeugs um seine Längsachse das Melderteil mit antreibt. Alternativ kann das Winkelglied auch als Zahnrad ausgebildet sein, bei dem ein Zahn des Zahnrades mit einer Auszackung an dem Melderteil in Eingriff gerät.

Zweckmäßige Weiterbildungen des Brandmelders können an dem Montage-/Abnehmewerkzeug beispielsweise darin bestehen, dass wenigstens ein eine berührungslos wirkende Kraft hervorrufendes Element als ein oder mehrere Stabmagnete oder als ringförmiger Magnet an dem Montage-/Abnehmewerkzeug anzuordnen.

In einer gut handhabbaren Ausführung des Montage-/Abnehmewerkzeugs ist das Montage-/Abnehmewerkzeug vorteilhaft mit anderen Werkzeugen, beispielsweise mit Stangen, insbesondere mit teleskopierbaren Stangen verbindbar, weswegen das dem Melder abgewandte Ende des Montage-/Abnehmewerkzeugs mit einem Steckerelement versehen ist, über welches die Abnehmeeinrichtung mit einer Buchse oder Kupplung einer Halteeinrichtung verbindbar ist.

Im Rahmen der Erfindung ist es auch denkbar zwischen Sockelteil und Melderteil ein Adapterteil einzufügen. Dabei ist das Adapterteil bezüglich der Verriegelung gegenüber dem Melderteil wie ein Sockelteil ausgestaltet und gegenüber dem Sockelteil wie ein Melderteil.

Die Erfindung betrifft auch ein System zum Ver- und Entriegeln von einem Melderteil mit einem Sockelteil eines Gefahrenmelders. Das System besteht aus einem der zuvor beschriebenen Brandmelder und einem ebenfalls zuvor beschriebenen Montage-/Abnehmewerkzeug. Zum Entriegeln des Brandmelders, wird das Montage-/Abnehmewerkzeug an den Melder heran geführt und gegebenen Falls das, eine berührungslos wirkende Kraft hervorrufende Element z. B. ein Elektromagnet aktiviert. Durch das Heranführen bzw. das Aktivieren kann die berührungslos wirkende Kraft aus dem Montage-/Abnehmewerkzeug durch das Gehäuse des Brandmelders hindurch derart auf das im Melder befindliche Verriegelungselement einwirken, dass letzteres aus der Verriegelungsstellung in seine Entriegelungsstellung bewegt wird und eine Lösebewegung und/oder eine Schließbewegung von Melder- und Sockelteil freigibt.

Schließlich wird die Aufgabe auch durch ein Verfahren zum Ver- und Entriegeln von einem Melderteil mit einem Sockelteil eines Gefahrenmelders insbesondere eines Brandmelders gelöst. Zum Verriegeln wird ein Melderteil mit einem Sockelteil zusammengeführt und eine Schließbewegung, insbesondere eine Dreh- und/oder Steckbewegung zwischen Melder- und Sockelteil, ausgeführt.

Schon vor oder beim Zusammenführen von Melder- und Sockelteil oder erst während der Schließbewegung wird ein im Bereich zwischen Melder und Sockel befindliches Verriegelungselementes in eine Entriegelungsstellung ausgelenkt. Nach dem Erreichen einer Verriegelungsposition wird die Schließbewegung beendet und das Verriegelungselement gleitet aus der Entriegelungsstellung in eine Verriegelungsstellung. Das Gleiten in die Verriegelungsstellung kann durch Schwerkraft bedingt erfolgen. In diesem Fall wird sich das Verriegelungselement bei Deckenmontage des Sockelteils im Sockelteil befinden und zum Verriegeln in Richtung des Melderteils gleiten, wo es in eine Ausnehmung eingreift. Wird das Verriegelungselement z.B. durch eine Federkraft angetrieben, kann es ebenfalls bei Deckenmontage des Sockels auch im Melderteil angeordnet sein und zum Verriegeln in Richtung des Sockelteils gleiten. Zum Entriegeln wird zunächst ein Werkzeug insbesondere ein Montage-/Abnehmewerkzeug an das Melder- und Sockelteil herangeführt.

Bereits durch das Heranführen des Werkzeuges an das Melder und Sockelteil oder erst mit einer Aktivierung des Werkzeuges wirkt eine abstoßend oder anziehend wirkenden Kraft berührungslos auf das Verriegelungselement ein, welche das Verriegelungselement aus der Verriegelungsstellung in die Entriegelungsstellung überführt. Die berührungslos wirkende Kraft kann dabei bereits durch das Heranführen eines Magneten an das Melder- und Sockelteil und die Wechselwirkung mit dem Magnetfeld eines als Magnet ausgestalteten Verriegelungselements bewirkt werden. Im Falle eines oder mehrerer elektromagnetischer Spulen, welche einen Elektromagneten im Montage-/Abnehmewerkzeug bilden, kann das Bewirken der berührungslosen Kraft auch durch Aktivieren des Elektromagneten und wechselwirken dessen Magnetfeld mit dem Magnetfeld des als Magnet ausgestalteten Verriegelungselementes erfolgen. Somit wird die berührungslos wirkende Kraft in einer Ausgestaltung des Verfahrens von mindestens einem Magneten hervorgerufen, der als Permanentmagnet oder Elektromagnet ausgebildet ist.

Ob die berührungslos wirkende Kraft abstoßend oder anziehend wirkt, ist von der gewählten Polung der Magnetelemente im Montage-/Abnehmewerkzeug und des Verriegelungselementes abhängig. Die Polung wird in Abhängigkeit davon, wie und wo das Verriegelungselement im Brandmelder angeordnet ist, derart gewählt, dass bei Deckenmontage und bei vertikaler Anordnung des Verriegelungselements im Sockelteil sich gleichnamige Pole gegenüberstehen und das Verriegelungselement abgestoßen wird, während bei vertikaler Anordnung des Verriegelungselements im Melderteil sich auch ungleichnamige Pole gegenüberstehen können, um das Verriegelungselement anzuziehen.

Insbesondere bei horizontaler Anordnung des Verriegelungselementes ist es sogar denkbar, dass auch das Verriegeln durch Magnetkraft erfolgt. Dies kann insbesondere dann von Vorteil sein, wenn eine automatische Verriegelung nicht in jedem Fall gewünscht ist. Bei horizontaler Anordnung des Verriegelungselementes sind die Polungen der Magnetelemente und des Verriegelungselementes entsprechend den konstruktiven Vorgaben frei wählbar, so dass beispielsweise zum Verriegeln eine anziehende Kraft auf das Verriegelungselement erzeugt wird, und zum Entriegeln die Magnetelemente am Montage-/Abnehmewerkzeug umgedreht oder bei einem Elektromagneten die Stromrichtung umgekehrt werden, damit sich zum Entriegeln eine abstoßende Kraft gegenüber dem Verriegelungselement ergibt.

Die eine oder mehrere elektromagnetischen Spulen können aber auch ein sich änderndes Magnetfeld derart erzeugen, dass in einem als gutem elektrischen Leiter ausgebildetem Verriegelungselement ein Wirbelstrom induziert wird. Das Magnetfeld des induzierten Wirbelstroms ist dem Magnetfeld der erzeugenden Spule oder den Spulen entgegen gerichtet, so dass eine abstoßende Kraft auf das Verriegelungselement bewirkt wird. Somit wird in einer anderen Ausgestaltung des Verfahrens die berührungslos wirkende Kraft erzeugt, indem in dem Verriegelungselement ein Wirbelstrom induziert wird.

Schließlich kann die die berührungslos wirkende Kraft auch durch elektrostatische Felder hervorgerufen werden, in dem ein elektrisches Feld des Montage-/Abnehmewerkzeuges mit dem elektrischen Feld eines als Elektretelement ausgebildeten Verriegelungselements wechselwirkt. Auch hier können durch entsprechende Auswahl der Polungen abstoßende oder anziehende Kräfte bewirkt werden.

Für die vorstehend beschriebene Erfindung ist es für den Fachmann selbstverständlich, dass wenigstens das Gehäuse des Brandmelders zumindest in Teilbereichen für die vom Montage-/Abnehmewerkzeug getragenen oder erzeugten Felder durchlässig ist und keine abschirmenden Eigenschaften aufweist.

Die Erfindung wird nachstehend anhand von Ausführungsbeispielen in der Zeichnung näher erläutert. In teilweise schematisierter Darstellung zeigen hierbei die
- Fig.1: eine perspektivische Ansicht eines ersten Ausführungsbeispiels des Melders mit Sockelteil und Melderteil schräg von unten;
- Fig.2: eine perspektivische Ansicht des Melderteils des Brandmelders aus der Fig.1 schräg von 10 oben;
- Fig.3: eine perspektivische Ansicht eines Melderteils eines anderen Ausführungsbeispiels des Brandmelders schräg von oben;
- Fig.4: eine perspektivische Seitenansicht eines Verriegelungselements;
- Fig.5: eine perspektivische Ansicht des Sockelteils des Brandmelders aus den Fig.1 und 2 schräg von unten mit daran angeordnetem Zwischenboden des Melderteils;
- Fig.6: eine perspektivische Ansicht des Sockelteils aus der Fig.5 ohne Zwischenboden;
- Fig.7: eine perspektivische Ansicht eines Ausführungsbeispiels eines ersten zugeordneten Montage-/Abnehmewerkzeugs mit Ringmagnet schräg von oben;
- Fig.8: eine perspektivische Ansicht eines Ausführungsbeispiels eines weiteren zugeordneten Montage-/Abnehmewerkzeugs mit einer Mehrzahl von Stabmagneten schräg von oben.

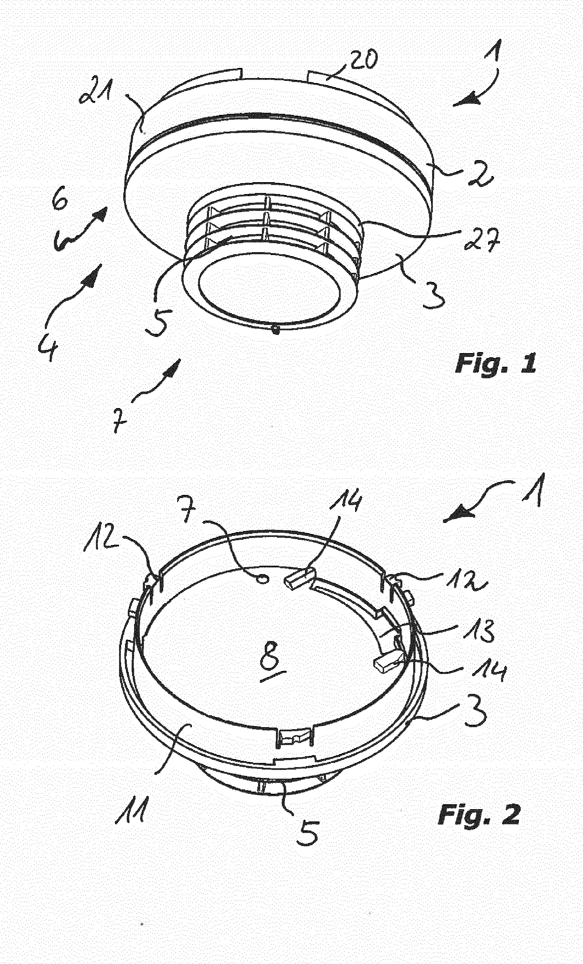

In der Fig.1 erkennt man einen im Ganzen mit 1 bezeichneten Brandmelder, mit einem Sockelteil 2 zur Befestigung des Brandmelders beispielsweise an einer nicht näher dargestellten Raumdecke. Mit dem Sockelteil 2 ist ein Melderteil 3 lösbar verbunden, das eine auch im weiteren Verlauf nicht näher dargestellte, für wenigstens eine Brandkenngröße empfindliche Sensorik aufnimmt. In ihrer Gebrauchsstellung durch eine Drehbewegung zusammengesetzt bilden das Sockelteil 2 und das Melderteil 3 das Gehäuse 4 des Brandmelders 1. Dieses zusammengesetzte Gehäuse 4 zeigt dabei einen Körper mit zwei zylindrischen Abschnitten unterschiedlichen Querschnitts, deren dem Betrachter abgewandter Abschnitt im Wesentlichen durch die Außenwand des Sockelteils 2 gebildet ist, während der dem Betrachter zugewandte Abschnitt die Sensorik des Melders aufnimmt. Dieser Abschnitt ist mit Zutrittsöffnungen für den Zutritt von Umgebungsluft zu der Sensorik versehen, die in drei axial benachbarten Reihen, radial am Umfang dieses Abschnitts verteilt sind und mit Auszackungen 5 versehen sind.

In der Fig.1 zunächst nicht zu erkennen ist dabei das an dem Sockelteil 2 befindliche, bewegbare Verriegelungselement 6, das in seiner Verriegelungsstellung in eine Ausnehmung 7 an dem Melderteil 3 greift, deren Begrenzung eine Bewegung zum Lösen des in Gebrauchsstellung mit dem Sockelteil 2 verbundenen Melderteils 3 von ersterem verhindert, dieser Umstand erschließt sich aber in den folgenden Figuren, insbesondere den Figuren 2, 3, 5 und 6. Das Verriegelungselement 6 ist in einem von dem Seitenrand beabstandeten Innenbereich des Brandmelders zwischen Sockel- und Melderteil 2, 3 angeordnet und durch eine von außerhalb des Brandmelders 1 ausgeübte Magnetkraft angetrieben aus seiner Verriegelungsstellung in eine Entriegelungsstellung überführbar, welche die Lösebewegung und/oder eine Schließbewegung der Teile 2, 3 voneinander bzw. zueinander freigibt.

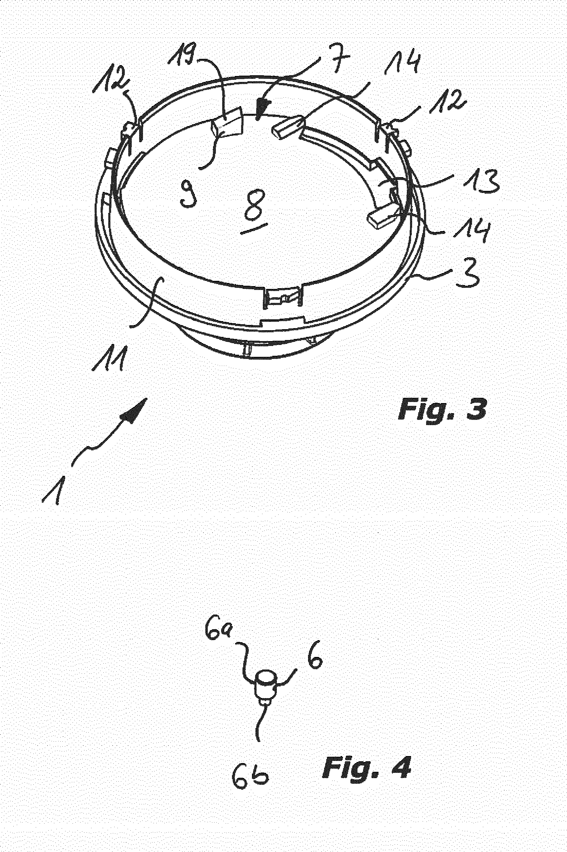

In der Fig.4 erkennt man dazu, dass das Verriegelungselement 6 durch einen Stift mit zwei zylindrischen Abschnitten 6a, 6b, also einen Stempel gebildet ist, und in der Lage ist, durch Schwerkraft oder eine andere antreibende Kraft bedingt aus seiner Entriegelungsstellung in die Verriegelungsstellung zu gleiten, wenn die Ver- bzw. Entriegelungsrichtung etwa der Vertikalen entspricht. Das Verriegelungselement ist dabei magnetisch ausgebildet.

Der in der Fig.4 untere, eingeschnürte Abschnitt 6b des Verriegelungselements 6 greift beim Verriegeln in die Ausnehmung 7 des Melderteils 3 des Brandmelders 1, die in der Fig.2 durch eine kreisrunde Öffnung 7 an dem Melderteilboden 8 gebildet ist, die man in dessen oberen Bereich erkennt. Die Ausnehmung 7 ist in der Fig.3 durch den für den Betrachter rechts des Vorsprungs 9 befindlichen Bereich gebildet, in den das Verriegelungselement 6 in Gebrauchsstellung des Melderteils 3 des Brandmelders 1 greift. Der Vorsprung 9 bildet dann einen Anschlag, der eine lösende Drehbewegung des Melderteils 3 gegen das Sockelteil 2 verhindert, die in Perspektive der Fig.3 einer Bewegung im Uhrzeigersinn entspräche. Der Vorsprung weist überdies einen sich im Verlauf des Bewegungspfads des Verriegelungselements 6 ändernden, in Verriegelungsrichtung größer werdenden Querschnitt auf, wie an der Schräge 19 des Vorsprungs 9 in der Fig.3 zu erkennen ist.

Durch die beim Lösen von außerhalb ausgeübte Magnetkraft gleitet das Verriegelungselement 6 aus der Ausnehmung 7 der Fig. 2 und 3 heraus, verlässt also die Öffnung 7 der Fig.2 bzw. überwindet das Hindernis des Vorsprungs 9. Ansonsten erkennt man an den Melderteilen 3 in den Fig.2 und 3, dass sie in ihren Randbereich jeweils mit einer umlaufenden axialen Seitenwand 11 versehen sind, an der drei als Rastnasen ausgebildete Verbindungsmittel 12 gleichmäßig beabstandet angeordnet sind. Diese Rastnasen ragen radial federnd beweglich an der Seitenwand nach außen. Außerdem erkennt man im rechten oberen Bereich des Melderteilbodens 8 auch noch einen Durchgriff 13, durch den nicht näher dargestellte elektrische Leitungen führbar sind. Die umlaufende axiale Seitenwand 11 begrenzt das Melderinnere als Seitenrand.

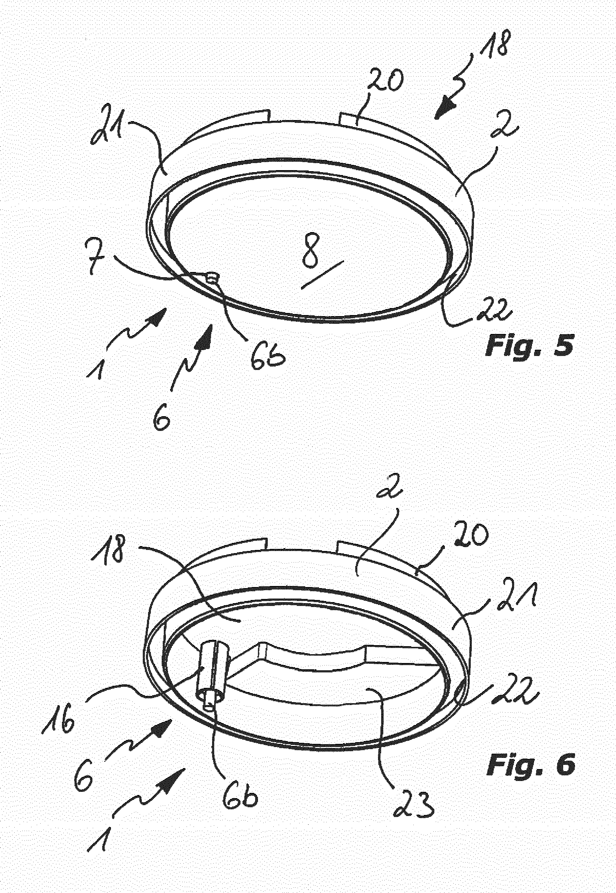

In den Fig.5 und 6 ist demgegenüber jeweils das Sockelteil 2 eines Brandmelders 1 gezeigt, wobei in der Darstellung der Fig.5 an dem Sockelteil 2 der dem Melderteil 3 zugeordnete Melderteilboden 8 gezeigt ist, um den Durchgriff des Verriegelungselements 6 mit seinem eingeschnürten Abschnitt 6b durch die Ausnehmung 7 zu verdeutlichen, wie sie bei Anordnung eines in der Fig.2 gezeigten Melderteils zu Stande käme. Beide Sockelteile 2 der Fig.5 und 6 sind durch einen Zylinderabschnitt 20 gebildet, der dem Betrachter abgewandt durch einen Deckel 18 verschlossen ist. An der dem Betrachter zugewandten Innenseite des Deckels 18 erkennt man einen Sockel 23, an dem ein nicht gezeigter Klemmblock zur elektrischen Kontaktierung angeordnet werden kann. Dem Sockel 23 benachbart erkennt man außerdem ein als Hülse ausgebildetes Führungsmittel 16, in dem das Verriegelungselement 6 geführt ist. Der Zylinderabschnitt 20 wird von einer Seitenwand 21 geringerer Höhe mit gleichmäßigem Abstand umlaufen, so dass eine zylindrische Ausnehmung 22 gebildet ist, in welche bei Verbindung von Melderteil 3 und Sockelteil 2 die Seitenwand 11 des Melderteils 3 eingreift. Die Seitenwand 21 bildet also die Außenwand des Gehäuses 4.

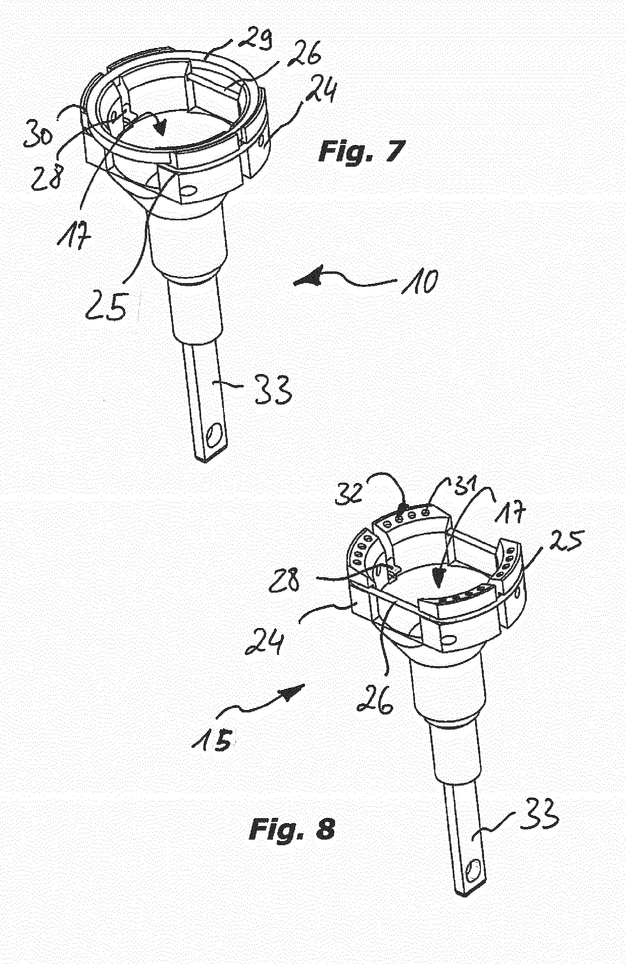

In den Fig.7 und 8 erkennt man Brandmeldern 1 zuordenbare Montage-/Abnehmewerkzeuge 10, 15 zum Anordnen oder Lösen des Melderteils von dem Sockelteil 2 des Brandmelders, wobei die in den Fig.7 und 8 gezeigten Montage-/Abnehmewerkzeuge 10, 15 sich im Wesentlichen durch Art der an ihnen vorgesehenen Magnete unterscheiden. Dabei bilden beide Montage- /Abnehmewerkzeuge 10, 15 an ihrem dem Betrachter zugewandten Ende zunächst eine zentrale Ausnehmung 17, in welcher der dem Sockelteil 2 abgewandte Abschnitt des Melderteils aufgenommen wird, während die Wandsegmente 24 diesen in zwei einander gegenüberliegenden Gruppen zu je zwei Segmenten 24 einfasst. In einer außen an den Wandsegmenten umlaufenden Nut 25 ist ein Gummiband als flexibles Haltemittel 26 aufgenommen welches bei Anordnung des Montage-/Abnehmewerkzeugs 10, 15 mit einer Anlagefläche 27, zu erkennen in der Fig.1, an dem Melderteil 3 einen Kraftschluss bildet und derart die Kraftübertragung in die jeweilige Drehbewegungsrichtung unterstützt.

Außerdem erkennt man an den Montage-/Abnehmewerkzeugen 10, 15 ein Antriebselement 28, das zwischen zwei benachbarten Wandsegmenten 24 des jeweiligen Montage-/Abnehmewerkzeugs 10, 15 angeordnet ist. Dieses Antriebselement bildet ein verkippbaren Winkel bzw. ein drehbares Zahnrad, die in Gebrauchsstellung des Montage-/Abnehmewerkzeugs 10, 15 an dem Brandmelder 1 in eine Auszackung 5 des Melderteils 3 greifen.

An den jeweiligen Montage-/Abnehmewerkzeugen 10, 15 wird die zur Entriegelung des Verriegelungselements 6 notwendige Magnetkraft von außen durch stirnseitige Anordnung eines Magneten zugeführt, der im Falle der Fig. 7 ein Ringmagnet 29 ist, der in einer stirnseitig offenen Nut 30 des Montage- /Abnehmewerkzeugs 10 aufgenommen ist, während an dem Montage- /Abnehmewerkzeug 15 der Fig. 8 jedes von dessen Wandsegmenten jeweils vier Aufnahmen 31 für Stabmagnete 32 hat.

An dem jeweiligen Brandmelder 1 abgewandten Ende ist das Montage-/Abnehmewerkzeug 10, 15 jeweils mit einem Steckerelement 33 versehen, über welches das Montage- /Abnehmewerkzeug mit einer Buchse oder einer Kupplung einer Halteeinrichtung verbindbar ist.

Demnach betrifft die vorstehend beschriebene Erfindung also einen Brandmelder 1 mit wenigstens einem der Befestigung dienenden Sockelteil 2, und mit einem mit dem Sockelteil 2 lösbar verbindbaren oder verbundenen Melderteil 3, in welchem zumindest eine für wenigstens eine Brandkenngröße empfindliche Sensorik aufgenommen ist, wobei das Sockelteil 2 ein bewegbares Verriegelungselement 6 aufweist, welches in seiner Verriegelungsstellung in eine Ausnehmung 7 an dem Melderteil 3 greift, deren Begrenzung eine Bewegung zum Lösen des in Gebrauchsstellung mit dem Sockelteil 2 verbundenen Melderteils 3 von ersterem verhindert.

Um einen Brandmelder 1 zur Verfügung zu haben, der ohne mechanische Zugriffsmöglichkeit auf das Melderinnere und bei erhöhter Lebensdauer ein einfaches Lösen des Melderteils 3 von dem Sockelteil 2 gestattet, ist das Verrieglungselement 6 in einem von dessen Seitenrand beabstandeten Innenbereich des Brandmelders 1 zwischen Sockel und Melderteil 2, 3 angeordnet und das Verriegelungselement 6 ist durch eine von außerhalb des Brandmelders 1 ausgeübte Magnetkraft angetrieben aus seiner Verriegelungsstellung in eine Entriegelungsstellung führbar, welche die Lösebewegung und/oder eine Schließbewegung der Teile 2, 3 zueinander freigibt.

## Patentansprüche

1. Gefahrenmelder, insbesondere Brandmelder (1), mit wenigstens einem der Befestigung dienenden Sockelteil (2), und mit einem mit dem Sockelteil (2) lösbar verbindbaren oder verbundenen 5 Melderteil (3), wobei das Sockel- (2) und/oder Melderteil (3) wenigstens ein bewegbares Verriegelungselement (6) aufweist, welches in seiner Verriegelungsstellung in eine Ausnehmung (7) an dem Melder- (3) und/oder Sockelteil (2) greift, deren Begrenzung eine Bewegung zum Lösen des in Gebrauchsstellung mit dem Sockelteil (2) verbundenen Melderteils (3) von ersterem verhindert, und das Verrieglungselement (6) in einem Innenbereich des Gefahrenmelders (1) zwischen Sockel- und Melderteil (2, 3) angeordnet ist **dadurch gekennzeichnet, dass** das Verriegelungselement (6) durch eine innerhalb des Gefahrenmelders (1) berührungslos wirkende Kraft, nämlich einer Magnetkraft oder einer elektrischen Kraft, angetrieben aus seiner Verriegelungsstellung in eine Entriegelungsstellung führbar ist, welche die Lösebewegung und/oder eine Schließbewegung der Teile (2, 3) zueinander freigibt.

2. Gefahrenmelder nach Anspruch 1, **dadurch gekennzeichnet, dass** das Verriegelungselement (6) durch zumindest einen Stift mit wenigstens einem geraden, insbesondere zylindrischen Abschnitt (6a, 6b) gebildet ist.

3. Gefahrenmelder nach einem der Ansprüche 1 oder 2, **dadurch gekennzeichnet, dass** das Verriegelungselement (6) durch Schwerkraft oder eine andere antreibende Kraft bedingt aus seiner Entriegelungsstellung in die Verriegelungsstellung gleitet.

4. Gefahrenmelder nach einem der Ansprüche 1, bis 3, **dadurch gekennzeichnet, dass** das Verriegelungselement (6) in einem an dem Sockel- (2) und/oder Melderteil (3) angeordneten Führungsmittel (16), insbesondere einer Führungshülse, aufgenommen ist, in welchem es zwischen zwei Anschlägen beweglich führbar ist.

5. Gefahrenmelder nach einem oder mehreren der Ansprüche 1 und 2 bis 4, **dadurch gekennzeichnet, dass** die Ausnehmung (7) durch zwei einander in Gebrauchsstellung von Sockel- und Melderteil (2, 3) gegenüberliegende, jeweils an diesen angeordnete Öffnungen gebildet ist, in welche das Verriegelungselement (6) in Gebrauchsstellung gemeinsam greift.

6. Gefahrenmelder nach einem der Ansprüche 1 bis 5, **dadurch gekennzeichnet, dass** die Ausnehmung (7) durch einen Vorsprung (9) an dem Sockel- (2) und/oder Melderteil (3) begrenzt ist, welcher sich im Bewegungspfad des Verriegelungselements (6) bei einer öffnenden oder schließenden Drehbewegung befindet.

7. Gefahrenmelder nach Anspruch 6, **dadurch gekennzeichnet, dass** der Vorsprung (9) einen sich im Verlauf des Bewegungspfads des Verriegelungselements (6) ändernden, insbesondere in Verriegelungsrichtung größer werdenden Querschnitt aufweist.

8. Montage-/Abnehmewerkzeug (10, 15) für einen Gefahrenmelder, insbesondere Brandmelder, nach einem oder mehreren der Ansprüche 1 bis 7, das mit wenigstens einem Antriebselement (28) versehen ist, **dadurch gekennzeichnet, dass** das Montage-/Abnehmewerkzeug (10, 15) wenigstens ein eine berührungslos wirkende Kraft, nämlich eine Magnetkraft oder eine elektrische Kraft, hervorrufendes Element, insbesondere ein Magnet- oder Elektretelement, (29, 32) aufweist, dessen Aktivierung oder dessen Annäherung an das Verriegelungselement (6) des Gefahrenmelders dieses aus seiner Verriegelungsstellung in seine Entriegelungsstellung bewegt, welche die Lösebewegung und/oder Schließbewegung von Sockel- und Melderteil (2, 3) zueinander freigibt.

9. Montage-/Abnehmewerkzeug nach Anspruch 8, **dadurch gekennzeichnet, dass** das Montage-/Abnehmewerkzeug (10, 15) mit einer Mehrzahl von Wandsegmenten (24) versehen ist, die in Gebrauchsstellung das Melderteil (3) zumindest teilweise einfassen, und an deren Stirnseite das wenigstens eine, eine berührungslos wirkende Kraft hervorrufende Element insbesondere ein Magnetelement (29, 32) an der Stirnseite der Wandsegmente (24) angeordnet ist.

10. Montage-/Abnehmewerkzeug für einen Gefahrenmelder nach Anspruch 8 und/oder 9, **dadurch gekennzeichnet, dass** das Antriebselement (28) zwischen zwei benachbarten Wandsegmenten (24) des Montage-/Abnehmewerkzeugs (10, 15) angeordnet ist, und welches in Gebrauchsstellung des Montage-/Abnehmewerkzeugs (10, 15) an dem Gefahrenmelder (1) in eine Auszackung (5) des Melderteils (3) greift.

11. Montage-/Abnehmewerkzeug nach einem der Anspruche 9 oder 10, **dadurch gekennzeichnet, dass** das Magnetelement (29, 32) als ein oder mehrere Stabmagnete (32), oder als ringförmiger Magnet (29) an dem Montage-/Abnehmewerkzeug (10, 15) angeordnet ist und wobei der bzw. die Magnete als Permanent- oder als Elektromagnet ausgebildet sind.

12. System zum Ver- und Entriegeln von einem Melderteil (3) mit einem Sockelteil (2) eines Gefahrenmelders, insbesondere Brandmelders, (1) bestehend aus einem Gefahrenmelder (1) nach einem oder mehreren der Ansprüche 1 bis 7 und einem Montage-/Abnehmewerkzeug (10, 15) nach einem oder mehreren der Ansprüche 8 bis 11, wobei von dem Montage-/Abnehmewerkzeug (10, 15) eine berührungslos wirkende magnetische oder elektrische Kraft ausgeht, die auf das Verriegelungselement (6) im Melder (1) einwirkt und letzteres aus der Verriegelungsstellung in seine Entriegelungsstellung bewegt.

13. Verfahren zum Ver- und Entriegeln von einem Melderteil (3) mit einem Sockelteil (2) eines Gefahrenmelders, insbesondere eines Brandmelders, mit den Verfahrensschritten:
a) Zusammenführen von einem Melderteil (3) mit einem Sockelteil (2),
b) Ausführen einer Schließbewegung insbesondere einer Drehbewegung zwischen Melder- (3) und Sockelteil (2),
c) Auslenken eines Verriegelungselementes (6) in eine Entriegelungsstellung vor oder beim Zusammenführen von Melder- (3) und Sockelteil (2) oder während der Schließbewegung,
d) Beenden der Schließbewegung nach Erreichen einer Verriegelungsposition,
e) Gleiten des Verriegelungselements (6) aus der Entriegelungsstellung in eine Verriegelungsstellung,
f) Heranführen eines Werkzeuges (10, 15) insbesondere eines Montage-/Abnehmewerkzeugs an Melder- (3) und Sockelteil,
**gekennzeichnet durch** ein
g) Bewirken einer berührungslos auf das Verriegelungselement (6) abstoßend oder anziehend wirkenden magnetischen oder elektrischen Kraft, welche das Verriegelungselement (6)aus der Verriegelungsstellung in die Entriegelungsstellung überführt.

14. Verfahren zum Ver- und Entriegeln von einem Melderteil (3) mit einem Sockelteil (2) eines Gefahrenmelders insbesondere eines Brandmelders nach Anspruch 13 **dadurch gekennzeichnet, dass** die berührungslos wirkende Kraft von mindestens einem Magneten hervorgerufen wird, der als Permanentmagnet oder Elektromagnet ausgebildet ist.

15. Verfahren zum Ver- und Entriegeln von einem Melderteil (3) mit einem Sockelteil (2) eines Gefahrenmelders insbesondere eines Brandmelders nach Anspruch 13 **dadurch gekennzeichnet, dass** die berührungslos wirkende Kraft erzeugt wird, indem in dem Verriegelungselement (6) ein Wirbelstrom induziert wird.

## Claims

1. Hazard alarm, in particular fire alarm (1), having at least one base (2) used for fixing, and having a detector part (3) that is or can be detachably connected to the base (2), wherein the base (2) and/or detector part (3) has at least one movable locking element (6) which, in its locking position, engages in a recess (7) on the detector part (3) and/or base (2), the limit of which prevents a movement for releasing the detector part (3) connected to the base (2) in the position of use from the base (2), and the locking element (6) is arranged in an internal area of the hazard alarm (1) between the base and detector part (2, 3),
**characterized in that** the locking element (6) can be guided out of its locking position, driven by a force acting without contact within the hazard alarm (1), namely a magnetic force or an electric force, into an unlocking position, which enables the releasing movement and/or a closing movement of the parts (2, 3) relative to each other.

2. Hazard alarm according to Claim 1, **characterized in that** the locking element (6) is formed by at least one pin having at least one straight, in particular cylindrical, section (6a, 6b).

3. Hazard alarm according to either of Claims 1 or 2, **characterized in that** the locking element (6) slides out of its unlocking position into the locking position as a result of gravity or another driving force.

4. Hazard alarm according to one of Claims 1 to 3, **characterized in that** the locking element (6) is accommodated in a guide means (16), in particular a guide sleeve arranged on the base (2) and/or detector part (3), in which it is movably guided between two stops.

5. Hazard alarm according to one or more of Claims 1 and 2 to 4, **characterized in that** the recess (7) is formed by two openings located opposite each other in the position of use of the base and detector part (2, 3) and each arranged on the latter, into which the locking element (6) engages jointly in the position of use.

6. Hazard alarm according to one of Claims 1 to 5, **characterized in that** the recess (7) is delimited by a projection (9) on the base (2) and/or detector part (3), which is located in the movement path of the locking element (6) during an opening or closing rotational movement.

7. Hazard alarm according to Claim 6, **characterized in that** the projection (9) has a cross section that changes in the course of the movement path of the locking element (6), in particular becomes larger in the locking direction.

8. Mounting/removal tool (10, 15) for a hazard alarm, in particular a fire alarm, according to one or more of Claims 1 to 7, which is provided with at least one drive element (28), **characterized in that** the mounting/removal tool (10, 15) is at least one element causing a force acting without contact, namely a magnetic force or an electric force, in particular a magnetic or electret element (29, 32), of which the activation or its approach to the locking element of the hazard alarm moves the locking element from its locking position into its unlocking position, which enables the releasing movement and/or closing movement of the base and detector part (2, 3) relative to each other.

9. Mounting/removal tool according to Claim 8, **characterized in that** the mounting/removal tool (10, 15) is provided with a plurality of wall segments (24) which, in the position of use, at least partly enclose the detector part (3), and on the front face of which the at least one element causing a force acting without contact, in particular a magnetic element (29, 32), is arranged on the front face of the wall segments (24).

10. Mounting/removal tool for a hazard alarm according to Claim 8 and/or 9, **characterized in that** the drive element (28) is arranged between two adjacent wall segments (24) of the mounting/removal tool (10, 15), and, in the position of use of the mounting/removal tool (10, 15), engages in the hazard alarm (1) in a serration (5) of the detector part (3).

11. Mounting/removal tool according to either of Claims 9 or 10, **characterized in that** the magnetic element (29, 32) is arranged on the mounting/removal tool (10, 15) as one or more bar magnets (32) or as an annular magnet (29), and the magnet or magnets is/are formed as a permanent magnet or as an electromagnet.

12. System for locking and unlocking a detector part (3) to/from a base (2) of a hazard alarm, in particular a fire alarm (1), comprising a hazard alarm (1) according to one or more of Claims 1 to 7 and a mounting/removal tool (10, 15) according to one or more of Claims 8 to 11, wherein a magnetic or electric force acting without contact originates from the mounting/removal tool (10, 15), acts on the locking element (6) in the alarm (1) and moves the latter out of the locking position into its unlocking position.

13. Method for locking and unlocking an alarm part (3) to/from a base (2) of a hazard alarm, in particular a fire alarm, having the method steps:
a. bringing a detector part (3) together with a base (2),
b. performing a closing movement, in particular a rotational movement, between the detector part (3) and base (2),
c. deflecting a locking element (6) into an unlocking position before or during the brining together of the detector part (3) and base (2) or during the closing movement,
d. ending the closing movement after the locking position has been reached,
e. sliding the locking element (6) out of the unlocking position into a locking position,
f. bringing a tool (10, 15), in particular a mounting/removal tool, up to the detector part (3) and base,
**characterized by**
g. effecting a magnetic or electric force, acting repulsively or attractively without contact on the locking element (6), which transfers the locking element (6) out of the locking position into the unlocking position.

14. Method for locking and unlocking a detector part (3) to/from a base (2) of a hazard alarm, in particular a fire alarm, according to Claim 13, **characterized in that** the force acting without contact is caused by at least one magnet, which is formed as a permanent magnet or electromagnet.

15. Method for locking and unlocking a detector part (3) to/from a base (2) of a hazard alarm, in particular a fire alarm, according to Claim 13, **characterized in that** the force acting without contact is produced by an eddy current being induced in the locking element (6).

## Revendications

1. Avertisseur de danger, en particulier avertisseur d'incendie (1), comportant au moins une partie socle (2) servant à la fixation, et comportant une partie avertisseur (3) pouvant être reliée ou reliée de manière amovible à la partie socle (2), la partie socle (2) et/ou la partie avertisseur (3) comprenant au moins un élément de verrouillage (6) mobile, lequel vient en prise dans un évidement (7) sur la partie avertisseur (3) et/ou la partie socle (2) dans sa position de verrouillage, dont la limitation empêche un mouvement permettant de libérer la partie avertisseur (3), reliée à la partie socle (2) dans la position d'utilisation, de cette partie socle, et l'élément de verrouillage (6) étant disposé dans une région intérieure de l'avertisseur de danger (1) entre la partie socle et la partie avertisseur (2, 3), **caractérisé en ce que** l'élément de verrouillage (6) peut être guidé par le biais d'une force agissant sans contact à l'intérieur de l'avertisseur de danger (1), à savoir une force magnétique ou une force électrique, de manière entraînée de sa position de verrouillage à une position de déverrouillage, laquelle autorise le mouvement de libération et/ou un mouvement de fermeture des parties (2, 3) l'une par rapport à l'autre.

2. Avertisseur de danger selon la revendication 1, **caractérisé en ce que** l'élément de verrouillage (6) est formé par au moins une goupille dotée d'au moins une partie (6a, 6b) rectiligne, en particulier cylindrique.

3. Avertisseur de danger selon l'une des revendications 1 et 2, **caractérisé en ce que** l'élément de verrouillage (6) glisse de sa position de déverrouillage à la position de verrouillage du fait de la force de gravité ou d'une autre force d'entraînement.

4. Avertisseur de danger selon l'une des revendications 1 à 3, **caractérisé en ce que** l'élément de verrouillage (6) est reçu dans un moyen de guidage (16) disposé sur la partie socle (2) et/ou la partie avertisseur (3), en particulier une douille de guidage, moyen de guidage dans lequel il peut être guidé entre deux butées.

5. Avertisseur de danger selon l'une ou plusieurs des revendications 1 et 2 à 4, **caractérisé en ce que** l'évidement (7) est formé par deux ouvertures se faisant face dans la position d'utilisation de la partie socle et de la partie avertisseur (2, 3) et disposées respectivement sur celles-ci, ouvertures dans lesquelles l'élément de verrouillage (6) vient en prise conjointement dans la position d'utilisation.

6. Avertisseur de danger selon l'une des revendications 1 à 5, **caractérisé en ce que** l'évidement (7) est limité par une saillie (9) sur la partie socle (2) et/ou la partie avertisseur (3), laquelle saillie se trouve dans la trajectoire de mouvement de l'élément de verrouillage (6) en cas de mouvement rotatif d'ouverture ou de fermeture.

7. Avertisseur de danger selon la revendication 6, **caractérisé en ce que** la saillie (9) présente une section transversale variant le long du tracé de la trajectoire de mouvement de l'élément de verrouillage (6), en particulier augmentant dans la direction de verrouillage.

8. Outil de montage/démontage (10, 15) pour un avertisseur de danger, en particulier un avertisseur d'incendie, selon l'une ou plusieurs des revendications 1 à 7, lequel outil est doté d'au moins un élément d'entraînement (28), **caractérisé en ce que** l'outil de montage/démontage (10, 15) comprend au moins un élément produisant une force agissant sans contact, à savoir une force magnétique ou une force électrique, en particulier un élément magnétique ou un élément électret (29, 32), dont l'activation ou dont le rapprochement de l'élément de verrouillage (6) de l'avertisseur de danger déplace celui-ci de sa position de verrouillage à sa position de déverrouillage, laquelle autorise le mouvement de libération et/ou le mouvement de fermeture de la partie socle et de la partie avertisseur (2, 3) l'une par rapport à l'autre.

9. Outil de montage/démontage selon la revendication 8, **caractérisé en ce que** l'outil de montage/démontage (10, 15) est doté d'une pluralité de segments de paroi (24) qui entourent la partie avertisseur (3) au moins partiellement dans la position d'utilisation, et au niveau du côté frontal desquels l'au moins un élément produisant une force agissant sans contact, en particulier un élément magnétique (29, 32), est disposé au niveau du côté frontal des segments de paroi (24).

10. Outil de montage/démontage pour un avertisseur de danger selon la revendication 8 et/ou 9, **caractérisé en ce que** l'élément d'entraînement (28) est disposé entre deux segments de paroi (24) adjacents de l'outil de montage/démontage (10, 15), et lequel, dans la position d'utilisation de l'outil de montage/démontage (10, 15), vient en prise dans une dentelure (5) de la partie avertisseur (3) sur l'avertisseur de danger (1).

11. Outil de montage/démontage selon l'une des revendications 9 et 10, **caractérisé en ce que** l'élément magnétique (29, 32) est disposé sur l'outil de montage/démontage (10, 15) sous la forme d'un ou plusieurs barreaux magnétiques (32), ou sous la forme d'un aimant annulaire (29) et le ou les aimants étant réalisés sous forme d'aimant permanent ou d'électroaimant.

12. Système permettant de verrouiller et de déverrouiller une partie avertisseur (3) et une partie socle (2) d'un avertisseur de danger, en particulier d'un avertisseur d'incendie (1) constitué d'un avertisseur de danger (1) selon l'une ou plusieurs des revendications 1 à 7 et d'un outil de montage/démontage (10, 15) selon l'une ou plusieurs des revendications 8 à 11, une force magnétique ou électrique agissant sans contact émanant de l'outil de montage/démontage (10, 15), laquelle force agit sur l'élément de verrouillage (6) dans l'avertisseur (1) et déplace celui-ci de la position de verrouillage à sa position de déverrouillage.

13. Procédé permettant de verrouiller et de déverrouiller une partie avertisseur (3) et une partie socle (2) d'un avertisseur de danger, en particulier d'un avertisseur d'incendie, comportant les étapes de procédé suivantes :
a) joindre une partie avertisseur (3) avec une partie socle (2),
b) effectuer un mouvement de fermeture, en particulier un mouvement rotatif, entre la partie avertisseur (3) et la partie socle (2),
c) dévier un élément de verrouillage (6) dans une position de déverrouillage avant ou lors de la jonction de la partie avertisseur (3) et de la partie socle (2) ou pendant le mouvement de fermeture,
d) terminer le mouvement de fermeture après qu'une position de verrouillage a été atteinte,
e) faire glisser l'élément de verrouillage (6) de la position de déverrouillage à une position de verrouillage,
f) rapprocher un outil (10, 15), en particulier un outil de montage/démontage, de la partie avertisseur (3) et de la partie socle,
**caractérisé par**
g) le fait de provoquer une force magnétique ou électrique agissant sans contact sur l'élément de verrouillage (6) par répulsion ou attraction, laquelle force transfère l'élément de verrouillage (6) de la position de verrouillage à la position de déverrouillage.

14. Procédé permettant de verrouiller et de déverrouiller une partie avertisseur (3) et une partie socle (2) d'un avertisseur de danger, en particulier d'un avertisseur d'incendie, selon la revendication 13, **caractérisé en ce que** la force agissant sans contact est provoquée par au moins un aimant qui est réalisé sous forme d'aimant permanent ou d'électroaimant.

15. Procédé permettant de verrouiller et de déverrouiller une partie avertisseur (3) et une partie socle (2) d'un avertisseur de danger, en particulier d'un avertisseur d'incendie, selon la revendication 13, **caractérisé en ce que** la force agissant sans contact est produite par le fait qu'un courant de Foucault est induit dans l'élément de verrouillage (6).
